**Europäisches Patentamt**

**European Patent Office**

**Office européen des brevets**

(19)

(11) Veröffentlichungsnummer : **0 367 206 B1**

(12)
# EUROPÄISCHE PATENTSCHRIFT

(45) Veröffentlichungstag der Patentschrift :
**16.12.92 Patentblatt 92/51**

(51) Int. Cl.$^5$ : **C03B 9/38**

(21) Anmeldenummer : **89120146.9**

(22) Anmeldetag : **31.10.89**

(54) **Vorrichtung zum Kühlen der Form oder der Formen einer IS- oder RIS-Maschine zur Herstellung von Hohlglasartikeln.**

(30) Priorität : **03.11.88 DE 3837335**

(43) Veröffentlichungstag der Anmeldung :
**09.05.90 Patentblatt 90/19**

(45) Bekanntmachung des Hinweises auf die
Patenterteilung :
**16.12.92 Patentblatt 92/51**

(84) Benannte Vertragsstaaten :
**DE FR GB IT**

(56) Entgegenhaltungen :
**EP-A- 0 153 801**
**EP-A- 0 293 661**

(73) Patentinhaber : **RUHRGLAS GmbH**
**Ruhrglasstrasse 50**
**W-4300 Essen 12 (DE)**

(72) Erfinder : **Schommartz, Peter**
**Knappenstiege 19**
**W-4300 Essen 16 (DE)**
Erfinder : **Wolter, Joachim**
**Feldstrasse 37**
**W-4390 Gladbeck (DE)**

(74) Vertreter : **Spalthoff, Adolf, Dipl.-Ing.**
**Pelmanstrasse 31 Postfach 34 02 20**
**W-4300 Essen 1 (DE)**

**Beschreibung**

Die Erfindung betrifft eine Vorrichtung zum Kühlen der Form oder der Formen einer IS- oder RIS-Maschine zur Herstellung von Hohlglasartikeln, welche eine Kammer für die Kühlluft einer jeden Form aufweist, die eingangsseitig über eine von einem gesteuerten Ventil beaufschlagte Eintrittsöffnung mit einer Kühlluftzuleitung und ausgangsseitig bei geschlossener Form mit axialen Kühlkanälen der Form in Verbindung steht.

Eine derartige Kühlvorrichtung ist bekannt durch die EP-A-0 153 801. Bei dieser bekannten Kühlvorrichtung für die Fertigformen einer IS-Maschine sind die Sammelkammern für die Kühlluft einer Doppeltropfenmaschine zusammen mit einer Kühlluftzuführungsleitung, in der sich die Steuerventile befinden, in einer Konsole der Maschine angeordnet, wobei eine einstückige Ausbildung vorerwähnter Bestandteile vorhanden ist. Diese bekannte Ausgestaltung bringt den Nachteil mit sich, daß bei Reparaturen das ganze Aggregat entfernt werden muß, so daß vergleichsweise große Stillstandzeiten evtl. sogar für die ganze Maschine in Kauf genommen werden müssen.

Um diesen Nachteil zu vermeiden, wird erfindungsgemäß vorgeschlagen, daß die Kühlluftkammer bzw. die Kühlluftkammern in einer Horizontalebene geteilt ist bzw. sind und der bzw. die so gebildeten Ober- und Unterteile der Kammer bzw. der Kammern lösbar miteinander verbunden sind.-

Wenn hierbei mindestens die Oberteile der Kammern mehrerer Formen einer Station der Maschine eine Baueinheit bilden, ergibt sich der Vorteil, daß das Oberteil oder die Baueinheit der Oberteile mit den zugehörigen Bauteilen leicht und schnell von dem Unterteil bzw. den Unterteilen abgenommen und durch ein neues entsprechendes Bauteil ersetzt werden kann, woraufhin der Betrieb in vergleichsweise kurzer Zeit fortgesetzt werden kann.

Ganz besonders vorteilhaft erweist sich die gattungsgemäße Vorrichtung zum Kühlen der Fertigform bzw. der Fertigformen einer IS- oder RIS-Maschine, wenn die Kammer bzw. die Kammern in einer Konsole der Maschine angeordnet ist bzw. sind und die Kammer bzw. die Kammern von einen Vakuumrohr bzw. Vakuumrohren durchsetzt ist bzw. sind, das bzw. die von dem Formenboden bzw. den Formenböden nach außen geführt ist bzw. sind. Diese bekannten Vakuumrohre dienen der Erzeugung eines Unterdrucks innerhalb der Fertigformen. Das die Kammer durchsetzende Vakuumrohr bzw. die die Kammern durchsetzenden Vakuumrohre ist bzw. sind in dem Oberteil der Kammer bzw. in den Oberteilen der Kammern angeordnet. Durch diese Ausgestaltung ist es möglich, bei etwa in den Vakuumrohren auftretenden Verstopfungen das ganze Oberteil einschließlich des zugehörigen Vakuumrohres bzw. die die Oberteile enthaltene Baueinheit mit zugehörigen Vakuumrohren gegen ein neues Oberteil bzw. eine neue Baueinheit auszuwechseln. Auch dieser Wechsel läßt sich in vergleichsweise kurzer Zeit bewerkstelligen.

Bei der aus der EP-A-0 153 801 bekannten Kühlvorrichtung finden eingangsseitig sich konisch verjüngende Eintrittsöffnungen für die Kühlluft Verwendung, denen entsprechend gestaltete Schließglieder der Ventile zugeordnet sind. Diese Konus-Ventilsitze weisen den Nachteil auf, daß diese sehr leicht zu Verklemmungen führen, so daß die Ventile hängenbleiben, mit der Folge, daß schwer beschädigte Artikel auf der Maschine hergestellt werden. Um diesen Mangel bei der erfindungsgemäßen Vorrichtung zu beseitigen, wird weiterhin vorgeschlagen, daß der Eintrittsöffnung der Kammer bzw. den Eintrittsöffnungen der Kammern je eine Schließplatte des bzw. der Ventile zugeordnet ist, welche in geschlossenem Zustand an dem unteren Rand der Eintrittsöffnung anliegt. Auf diese Weise wird ein flächiges Anliegen der Schließplatte am unteren Rand der Eintrittsöffnung erreicht, so daß Verklemmungen mit Sicherheit ausgeschlossen sind und etwa vorhandene geringfügige Unebenheiten ohne weiteres ausgeglichen werden können.

Bei der aus der EP-A-0 153 801 bekannten Kühlvorrichtung finden Ventile Verwendung, deren Schäfte von Druckfedern umgeben sind und die einendig in Kolben einmünden, die in druckmittelbeaufschlagbaren Zylindergehäusen geführt sind. Diese einseitige Führung der Kolbenstangen erweist sich als nachteilig, da diese sehr leicht zu Steuerfehlern der Ventile führt und damit zu einer ungenügenden Kühlung der zugehörigen Fertigformen.

Um diesen Nachteil der bekannten Kühlvorrichtung im Falle der erfindungsgemäßen Vorrichtung zu vermeiden, besteht der Ventilschaft des bzw. der Ventile aus einer Kolbenstange, welche beiderseits des Kolbens in deren Zylindergehäusen geführt ist. Diese doppelte Führung der Kolbenstangen ergibt eine genaue Steuerung der Ventile, so daß die Fertigformen in der gewünschten Weise gekühlt werden und damit eine einwandfreie Produktion der herzustellenden Hohlglasartikel gewährleistet ist.

Vorteilhaft ist der Kolben beidseitig mit Druckmittel beaufschlagbar, so daß es keiner Verwendung von Stellfedern bedarf, sondern die Steuerung erfolgt sowohl in die eine als auch in die andere Endlage durch Druckmittelbeaufschlagung.

Um ein gutes Gleiten der Kolben und damit eine hohe Ansprechempfindlichkeit der Ventile zu erreichen, sind diese mit Kolbenringen aus Polytetrafluoräthylen ausgerüstet.

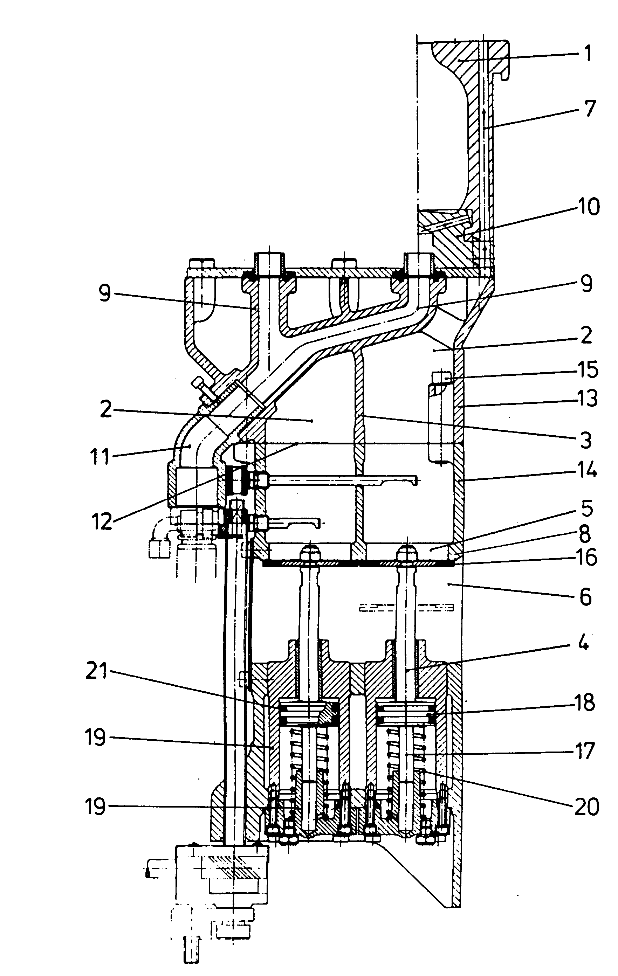

Ausführungsbeispiele der Erfindung sind anhand der Zeichnung näher erläutert, und zwar zeigt diese eine geschnittene Seitenansicht einer Formkühlung für Fertigformen einer Doppeltropfenmaschine.

Mit 1 ist die nur teilweise dargestellte Form der Doppelstation der Fertigformseite einer IS-Maschine bezeichnet. Die Formen 1 sind in herkömmlicher Weise auf der Oberseite von zwei einander benachbarten Kammern 2 angeordnet, die durch die Wandung 3 voneinander getrennt sind. Eingangsseitig stehen die Kammern 2 über eine von einem gesteuerten Ventil 4 beaufschlagte Eintrittsöffnung 5 mit einer Kühlluftzuleitung 6 und ausgangsseitig bei geschlossenen Formen 1 mit axialen Kühlkanälen 7 der Formen 1 in Verbindung.

Die Kammern 2 sind in einer Konsole 8 der Maschine vorgesehen.

Die Kammern 2 sind von Vakuumrohren 9 durchsetzt, die von den Böden 10 der Formen 1 nach außen geführt sind. Im dargestellten Ausführungsbeispiel vereinigen sich die beiden Vakuumrohre 9 zu einem gemeinsamen Rohrstück 11, welches außerhalb der Konsole 8 an eine Vakuumquelle angeschlossen ist, die in herkömmlicher Weise steuerbar ist.

Die Kammern 2 für die Kühlluft sind in der Horizontalebene 12 geteilt, unter Ausbildung der Oberteile 13 und 14, die je eine Baueinheit bilden. Die Baueinheiten der Oberteile 13 und 14 sind lösbar miteinander verbunden, und zwar mittels Schraubbolzen 15 od.dgl.

Bei Auftreten von Verstopfern in den Kanälen der Vakuumrohre 9 kann durch Lösen der Schraubbolzen 15 die Baueinheit mit den beiden Oberteilen 13 der Kammern 2 leicht und schnell abgenommen und durch eine neue Baueinheit einschließlich der Vakuumrohre 9 ersetzt werden, so daß der Betrieb der Station in kurzer Zeit wieder aufgenommen werden kann. Zu diesem Zweck durchsetzt das gemeinsame Rohrstück 11 der Vakuumrohre 9 eine Wandung eines Oberteils 13 einer Kammer 2, so daß die Montage bzw. Demontage nur mit dem Oberteil bzw. der Baueinheit der Oberteile durchgeführt wird.

Den Eintrittsöffnungen 5 der Kammern 2, welche zylindrisch ausgeführt sind, ist je eine Schließplatte 16 derart zugeordnet, daß diese im geschlossenen Zustand an dem unteren Rand der Eintrittsöffnung 5 anliegt. Die Schließplatten dichten somit von unten her gegen die Ränder der Eintrittsöffnungen ab. Auf diese Weise wird ein Hängenbleiben der Schließglieder der Ventile 4 verhindert.

Die Ventilschäfte der Ventile 4 bestehen aus einer Kolbenstange 17, welche beiderseits des Kolbens 18 in deren Zylindergehäusen 19 geführt sind. Im dargestellten Ausführungsbeispiel werden die unteren Abschnitte der Kolbenstange 17 zwar von Spiralfedern 20 umgeben, welche bei einseitiger Beaufschlagung der Kolben 18 Verwendung finden, jedoch können diese auch in Fortfall kommen, wenn die Kolben 18 beidseitig beaufschlagt werden.

Die Kolbenringe 21 bestehen vorzugsweise aus Polytetrafluoräthylen, so daß die Reibung sehr stark herabgesetzt ist, weil dieses Material über besonders gute Gleiteigenschaften verfügt.

Die Erfindung ist auf die dargestellte und beschriebene Doppeltropfenmaschine nicht beschränkt, sondern kann sowohl bei 3- oder 4-fach-Tropfenmaschinen oder mehr ebenso Anwendung finden wie bei einer 1-fach-Tropfenmaschine.

**Patentansprüche**

1. Vorrichtung zum Kühlen der Form oder der Formen (1) einer IS- oder RIS-Maschine zur Herstellung von Hohlglasartikeln, welche eine Kammer (2) für die Kühlluft einer jeden Form (1) aufweist, die eingangsseitig über eine von einem gesteuerten Ventil (4) beaufschlagte Eintrittsöffnung (5) mit einer Kühlluftzuleitung (6) und ausgangsseitig bei geschlossener Form (1) mit axialen Kühlkanälen (7) der Form (1) in Verbindung steht, dadurch gekennzeichnet, daß die Kühlluftkammer (2) bzw. -kammern (2) in einer Horizontalebene (12) geteilt ist bzw. sind und der bzw. die so gebildeten Oberteile (13) und Unterteile (14) lösbar miteinander verbunden sind.

2. Vorrichtung nach Anspruch 1, bei der mindestens die Oberteile (13) der Kammern (2) mehrerer Formen (1) eine Baueinheit bilden.

3. Vorrichtung nach Anspruch 1 oder 2, bei der die Kammer bzw. die Kammern (2) in einer Konsole (8) der Maschine angeordnet ist bzw. sind und die Kammer bzw. Kammern (2) von einem Vakuumrohr bzw. Vakuumrohren (9) durchsetzt ist bzw. sind, das bzw. die von dem Formenboden bzw. den Formenböden (10) nach außen geführt ist bzw. sind, und das die Kammer (2) durchsetzende Vakuumrohr (9) bzw. die die Kammern (2) durchsetzenden Vakuumrohre (9) in dem Oberteil (13) der Kammer (2) bzw. in den Oberteilen (13) der Kammern (2) angeordnet ist bzw. sind.

4. Vorrichtung nach einem der Ansprüche 1 - 3, bei der der Eintrittsöffnung (5) der Kammer (2) bzw. den Eintrittsöffnungen (5) der Kammern (2) je eine Schließplatte (16) des bzw. der Ventile (4) zugeordnet ist, welche im geschlossenen Zustand an dem unteren Rand der Eintrittsöffnung (5) anliegt.

5. Vorrichtung nach einem der Ansprüche 1 - 4, bei der der Ventilschaft des bzw. der Ventile (4) aus einer Kolbenstange (17) besteht, welche beiderseits des Kolbens (18) in dessen Zylindergehäuse (19) geführt ist.

6. Vorrichtung nach Anspruch 5, bei der der Kolben (18) beidseitig mit Druckmittel beaufschlagt ist.

**7.** Vorrichtung nach Anspruch 5 oder 6, bei der der Kolben (18) mit Kolbenringen (21) aus Polytetrafluoräthylen ausgerüstet ist.

## Claims

**1.** Device for cooling the mold or molds (1) of an IS or RIS machine for the production of hollow glass articles, which has a chamber (2) for the cooling air of each mold (1), which chamber is connected at its inlet side to a cooling air supply pipe (6), via an inlet aperture (5) that is acted upon by a controlled valve (4), and at the outlet side, when the mold (1) is closed, to axial cooling channels (7) of the mold (1),
characterised in that the cooling air chamber or chambers (2) is/are divided along a horizontal plane (12) and the upper part or parts (13) and lower part or parts (14) that are formed in this manner are detachably connected to one another.

**2.** Device according to Claim 1 in the case of which at least the upper parts (13) of the chambers (2) of several molds (1) form one component.

**3.** Device according to Claim 1 or 2 in the case of which the chamber or chambers (2) is/are arranged in a casing (8) of the machine and the chamber or chambers (2) is/are penetrated by a vacuum pipe or vacuum pipes (9) which is/are guided towards the exterior from the base or bases of the mold or molds (10), and that the vacuum pipe (9) penetrating through the chamber, or the vacuum pipes (9) penetrating through the chambers (2) is/are arranged in the upper part (13) of the chamber (2) or the upper parts (13) of the chambers (2).

**4.** Device according to one of Claims 1 to 3 in the case of which a closing plate (16) of the valve or valves (4) is associated with the inlet aperture (5) of the chamber (2) or the inlet apertures (5) of the chambers (2) in each case, which closing plate abuts the lower edge of the inlet aperture (5) in the closed state.

**5.** Device according to one of Claims 1 to 4 in which the valve shaft of the valve or valves (4) consists of a piston rod (17), which is guided on either side of the piston (18) into its cylinder casing (19).

**6.** Device according to Claim 5 in which the piston (18) is acted upon on both sides by a pressure medium.

**7.** Device according to Claim 5 or 6 in which the piston (18) is provided with piston rings (21) of polytetrafluoroethylene.

## Revendications

**1.** Dispositif pour le refroidissement du moule ou des moules (1) d'une machine (IS) (machine sectionnelle) ou d'une machine RIS destinée à la fabrication d'articles creux en verre, dispositif comportant une chambre (2) pour l'air de refroidissement de chacun des moules (1) qui est connectée, côté entrée, à une conduite d'arrivée d'air de refroidissement (6) par l'intermédiaire d'un orifice d'entrée (5) commandé par une valve (4) pilotée et, côté sortie, à des conduits de refroidissement (7) axiaux du moule (1) lorsque le moule (1) est fermé, caractérisé par le fait que la ou les chambre(s) à air de refroidissement (2) est (sont) divisée(s) dans un plan horizontal (12) et les parties supérieure(s) (13) et inférieure(s) (14) ainsi formées sont reliées entre elles avec possibilité de séparation.

**2.** Dispositif selon la revendication 1, dans lequel les parties supérieures (13) au moins des chambres (2) de plusieurs moules (1) forment un ensemble.

**3.** Dispositif selon la revendication 1 ou 2, dans lequel la (les) chambre(s) (2) est (sont) disposée(s) à l'intérieur d'un support (8) de la machine et la (les) chambre(s) (2) est (sont) traversées par un (des) tube(s) (9) à vide qui, du (des) fond(s) (10) du (des) moules, sont amenés vers l'extérieur et dans lequel le (les) tube(s) (9) à vide qui traversent la (les) chambres (2) est (sont) disposé(s) dans la (les) partie(s) supérieure(s) (13) de la (des) chambre(s) (2).

**4.** Dispositif selon l'une des revendications 1 à 3, dans lequel une plaque de fermeture (16) de la (des) valve(s) (4) est associée chaque fois à l'orifice d'entrée (aux orifices d'entrée) (5) de la (des) chambre(s) (2), laquelle plaque de fermeture, en position fermée, est appliquée contre le bord inférieur de l'orifice d'entrée (5).

**5.** Dispositif selon l'une des revendications 1 à 4, dans lequel la tige de valve de la (des) valves (4) est constituée par une tige de piston (17) qui est guidée dans le corps de vérin (19) de part et d'autre du piston (18).

**6.** Dispositif selon la revendication 5, dans lequel le piston (18) est sollicité sur ses deux faces par un fluide sous pression.

7. Dispositif selon la revendication 5 ou 6, dans lequel le piston (18) est pourvu de segments de piston (21) en poly (tétrafluoroéthylène).